# EUROPÄISCHE PATENTSCHRIFT

(11) **EP 0 483 889 B1**
(45) Veröffentlichungstag und Bekanntmachung des Hinweises auf die Patenterteilung: **07.12.1994**
(21) Anmeldenummer: 91202264.7
(22) Anmeldetag: 05.09.1991
(51) Int. Cl.: C01F 11/46, B01D 53/34

(54) **Verfahren zur Gipsreinigung**
Process for the purification of gypsum
Procédé pour purification de gypse

(30) Priorität: 30.10.1990 DE 4034497
(43) Veröffentlichungstag der Anmeldung: 06.05.1992
(73) Patentinhaber: METALLGESELLSCHAFT Aktiengesellschaft, 60015 Frankfurt (DE)
(72) Erfinder: Gröne, Dieter, W-6000 Frankfurt am Main (DE)

(56) Entgegenhaltungen:
- EP-A- 0 236 852
- EP-A- 0 262 396
- US-A- 4 487 784

## Beschreibung

Die Erfindung bezieht sich auf ein Verfahren zur Gipsreinigung unter Verwendung von Hydrozyklonen. Gipssuspensionen, die auf diese Art gereinigt werden, fallen vorzugsweise in Rauchgasentschwefelungsanlagen an, die mit wäßrigen Suspensionen von Kalkstein minderer Qualität betrieben werden.

Hydrozyklone werden in der Technik in vielfältiger Weise für die Klassierung und/oder Eindickung wäßriger Suspensionen eingesetzt. Derartige Apparatekombinationen sind bereits im Aufsatz von W. Gundelach/H.F. Trawinski, "Der Hydrozyklon" in: Chemie-Ing.-Techn., 32. Jahrg. (1960), Heft 4, Seiten 279-284, beschrieben worden. Nach der DE-B-36 07 191 verwendet man Hydrozyklone auch zur Ausschleusung von gelöstem Salz und Feinstpartikeln aus Absorptionslösungen von Rauchgasentschwefelungsanlagen und zur Ausschleusung von Gips.

Aus dem Dokument EP-A-0 262 396 ist ein Verfahren zur Herstellung von Calciumsulfatdihydrat aus Rauchgasentschwefelungsanlagen bekannt. Die Abtrennung des Rauchgasgipses erfolgt dabei mit Hilfe eines Hydrozyklons, wobei zur Verbesserung der Deponiefähigkeit des Gemisches von Flugasche, Rauchgasgips und im Abstoßwasser enthaltenen Salzen und Metallen eine Beeinflussung der Calciumsulfatdihydrat-Kristallform vorgeschlagen wird. Diese Beeinflussung soll durch eine geregelte feststofffreie Flüssigkeitszugabe zum in den Waschturm zurückzuführenden Oberlauf der Hydrozyklonstufe erfolgen.

Nachteilig bei den bisher vorgeschlagenen Verfahren bzw. Apparatekombinationen ist die noch ungenügende Trennung von Gipspartikeln und inerten Feinstpartikeln sowie die ungünstige Gesamtflüssigkeitsbilanz.

Der Erfindung liegt die Aufgabe zugrunde, Gips hoher Reinheit, vorzugsweise in mit minderwertigem Kalkstein betriebenen Rauchgasentschwefelungsanlagen, zu erzeugen, ohne dabei die Gesamtwasserbilanz zu verschlechtern.

Erfindungsgemäß wird diese Aufgabe dadurch gelöst, daß eine mit Hilfe einer Kalksteinsuspension gewonnene wäßrige Gipssuspension einer ersten Hydrozyklonstufe zugeführt wird, die mit einer Unterlauf-Feststoffkonzentration von 60 bis 80 Gew.-% arbeitet und deren Überlauf in einen Vorlagetank geleitet wird. Der Unterlauf der ersten Hydrozyklonstufe wird in einem Suspensionstank auf eine Feststoffkonzentration von 5 bis 20 Gew.-% verdünnt und einer zweiten Hydrozyklonstufe zugeführt, deren Überlauf auch in den Vorlagetank der ersten Hydrozyklonstufe eingeleitet wird. Der im Unterlauf der zweiten Hydrozyklonstufe mit einer Feststoffkonzentration von 40 bis 60 Gew.-% enthaltene Gips wird mittels eines Bandfilters oder einer Zentrifuge abgetrennt und aus dem Prozeß ausgeschleust. Die im Vorlagetank gesammelten Überläufe der ersten und zweiten Hydrozyklonstufe werden einer dritten Hydrozyklonstufe zugeführt. Der Überlauf der dritten Hydrozyklonstufe wird einem Eindicker zugeführt und darin von Feststoffteilchen befreit. Die Verunreinigungen, die sich im Unterlauf der Eindickerstufe befinden, werden dort abgezogen und entsorgt. Sie bestehen aus feinstteiligen Verunreinigungen des Gipses oder bei Rauchgasentschwefelungsanlagen aus den im verwendeten Kalkstein enthaltenen inerten Partikeln sowie den im Rauchgas enthaltenen und mitausgewaschenen Partikeln wie Schwermetalloxiden, Asche, Ruß. Das anfallende, auf eine Feststoffkonzentration von < 2 g/l eingestellte Klarwasser des Eindickers wird über einen Zwischentank in den der ersten Hydrozyklonstufe nachgeschalteten Suspensionstank geleitet und zur Verdünnung des Unterlaufs der ersten Hydrozyklonstufe eingesetzt. Der Unterlauf der dritten Hydrozyklonstufe wird zur Herstellung einer Kalksteinsuspension verwendet, die in der Rauchgasentschwefelungsanlage zur Gewinnung der Gipssuspension eingesetzt und anschließend der ersten Hydrozyklonstufe zugeführt wird.

Die Vorteile des Verfahrens werden darin gesehen, daß es gelingt,
a) die aus feinstteiligen Feststoffpartikeln bestehenden Verunreinigungen gezielt auszuschleusen,
b) durch den Wiedereinsatz des Eindickerklarlaufs zur Verdünnung der stark eingedickten Suspension der ersten Hydrozyklonstufe die Flüssigkeitsbilanz des Gesamtprozesses nicht negativ zu beeinflussen und
c) als Endprodukt einen entwässerten Gips mit einem mindestens 95 %igen Reinheitsgrad auch beim Einsatz von stark verunreinigten Ausgangssuspensionen zu gewinnen.

Vorteilhaft ist also zum einen die günstige Wasserbilanz des Rauchgasentschwefelungsverfahrens und zum anderen das Einbringen von Kristallisationskeimen für den Gips in die Kalksteinsuspension.

Falls eine sehr große Menge an Verunreinigungen abgetrennt werden muß oder falls ein höherer Reinheitsgrad des Gipses gefordert ist, werden zwischen die erste und zweite Hydrozyklonstufe eine oder mehrere Hydrozyklonstufen und zugehörige Suspensionstanks geschaltet, die analog der ersten Hydrozyklonstufe sowie nachfolgendem Suspensionstank betrieben werden.

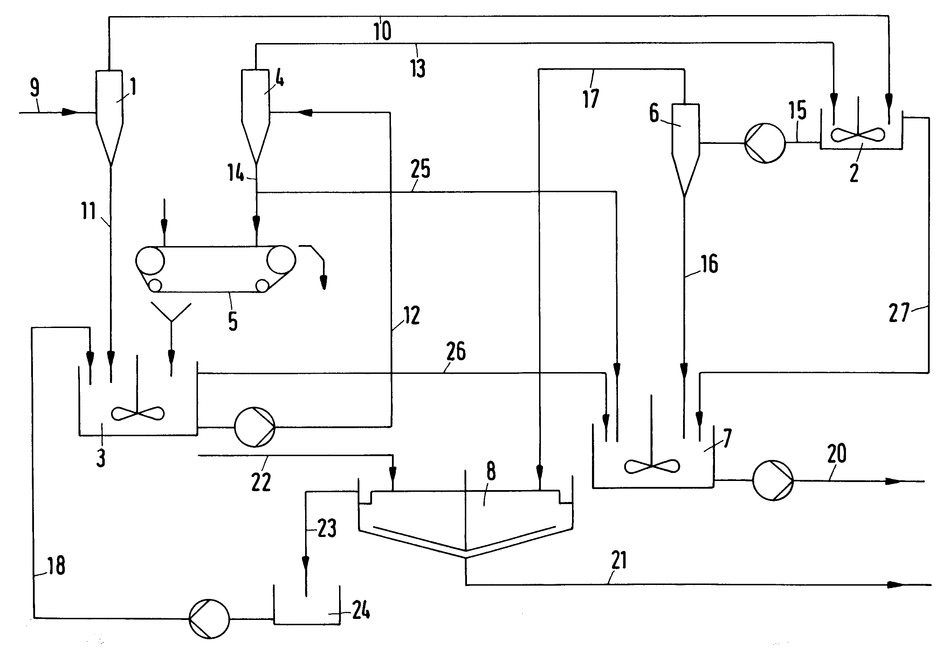

Ein Ausführungsbeispiel des Gegenstands der Erfindung ist in der Zeichnung dargestellt und wird nachstehend näher erläutert.

Eine innerhalb einer nach einem Naßverfahren arbeitenden Rauchgasentschwefelungsanlage anfallende Gipssuspension mit einem Feststoffgehalt von 10 Gew.-% wird über eine Förderleitung (9) in den Hydrozyklon (1) eingeleitet, dessen Unterlauf (11) mit einem Feststoffgehalt von 70 Gew.-% betrieben wird. Der Überlauf (10) der ersten Hydrozyklonstufe wird in einen Vorlagetank (2) geleitet. Der Unterlauf (11) der ersten Hydrozyklonstufe wird in einen Suspensionstank (3) auf einen Trockensubstanzgehalt von 10 Gew.-% verdünnt und über die Leitung (12) einer zweiten Hydrozyklonstufe (4) zugeführt, deren Überlauf (13) auch in den Vorlagetank (2) der ersten Hydrozyklonstufe (1) geleitet wird. Der im Unterlauf (14) der zweiten Hydrozyklonstufe enthaltene Gips wird mit einem Bandfilter (5) abgetrennt und entwässert und somit aus dem Prozeß ausgeschleust.

Der gemeinsame Überlauf (15) der ersten und zweiten Hydrozyklonstufe wird einer dritten Hydrozyklonstufe (6) über den Vorlagetank (2) zugeführt. Der Überlauf (17) der dritten Hydrozyklonstufe (6) wird einem Eindicker (8) zugeführt und darin, erforderlichenfalls unter Zuhilfenahme von Flockungsmitteln (22), von Feststoffteilchen bis auf einen Restgehalt < 2 g/l befreit. Die Verunreinigungen werden im Unterlauf (21) des Eindickers (8) abgezogen und entsorgt. Das anfallende Klarwasser (23) wird über einen Zwischentank (24) und die Leitung (18) in den Suspensionstank (3) geführt und zur Verdünnung des Unterlaufs (11) der ersten Hydrozyklonstufe eingesetzt. Der Unterlauf (16) der dritten Hydrozyklonstufe (6) wird zur Herstellung einer Kalksteinsuspension (20) benutzt, die in die Rauchgasentschwefelungsanlage zurückgeleitet und dort zur erneuten Bindung der Schwefeloxide verwendet wird. Aus sicherheitstechnischen Gründen sind die Leitungen (25), (26) und (27) vorgesehen, die in den vorgeschalteten Suspensionstank (7) münden.

## Patentansprüche

1. Verfahren zur Gipsreinigung in einer mit einer Kalksteinsuspension betriebenen Rauchgasentschwefelungsanlage unter Verwendung von Hydrozyklonen, dadurch gekennzeichnet, daß man
a) die mit Hilfe der Kalksteinsuspension gewonnene Gipssuspension einer ersten Hydrozyklonstufe (1) zuführt, die mit einer
Unterlauf-Feststoffkonzentration von 60 bis 80 Gew.-% arbeitet, und deren Überlauf (10) in einen Vorlagetank (2) leitet,
b) den Unterlauf (11) der ersten Hydrozyklonstufe in einen Suspensionstank (3) leitet, dort auf eine Feststoffkonzentration von 5 bis 20 Gew.-% verdünnt und einer zweiten Hydrozyklonstufe (4) zuführt, deren Überlauf (13) in den Vorlagetank (2) geführt wird,
c) den im Unterlauf (14) der zweiten Hydrozyklonstufe (4) mit einer Feststoffkonzentration von 40 bis 60 Gew.-% enthaltenen Gips mittels eines Bandfilters (5) oder einer Zentrifuge abtrennt und aus dem Verfahren ausschleust sowie
d) die im Vorlagetank (2) gesammelten Überläufe einer dritten Hydrozyklonstufe (6) zuführt, deren Überlauf (17) in einem Eindicker (8) von Feststoffteilchen befreit wird, das auf eine Feststoffkonzentration von < 2 g/l eingestellte Klarwasser (23) des Eindickers (8) zur unter b) genannten Verdünnung in den Suspensionstank (3) leitet und den Unterlauf (16) der dritten Hydrozyklonstufe (6) zur Herstellung einer Kalksteinsuspension in den Tank (7) führt und die Kalksteinsuspension (20) in der Rauchgasentschwefelungsanlage zur Gewinnung der Gipssuspension (9) einsetzt.

2. Verfahren nach Anspruch 1, dadurch gekennzeichnet, daß zwischen die erste und zweite Hydrozyklonstufe eine oder mehrere Hydrozyklonstufen und Suspensionstanks geschaltet und analog der ersten Hydrozyklonstufe sowie nachfolgendem Suspensionstank betrieben werden.

## Claims

1. A method for purifying gypsum in a flue gas desulphurisation plant operated with a limestone suspension using hydrocyclones, characterised in that
a) the gypsum suspension obtained with the aid of the limestone suspension is supplied to a first hydrocyclone stage (1), which operates with an underflow solids concentration of 60 to 80% by weight, and the overflow (10) of which is passed into a collecting tank (2),
b) the underflow (11) of the first hydrocyclone stage is passed into a suspension tank (3), is diluted therein to a solids concentration of 5 to 20% by weight and is fed to a second hydrocyclone stage (4), the overflow (13) of which is passed into the collecting tank (2),
c) the gypsum contained in the underflow (14) of the second hydrocyclone stage (4) with a solids concentration of 40 to 60% by weight is separated off by means of a belt filter (5) or a centrifuge, and is removed from the process, and
d) the overflows collected in the collecting tank (2) are supplied to a third hydrocyclone stage (6), the overflow (17) of which is freed of solids particles in a thickener (8), the clear water (23) from the thickener (8), which is set to a solids concentration of < 2 g/l, for the dilution mentioned in b) is fed into the suspension tank (3) and the underflow (16) of the third hydrocyclone stage (6) is passed into the tank (7) in order to produce a limestone suspension and the limestone suspension (20) is used in the flue gas desulphurisation plant for obtaining the gypsum suspension (9).

2. A method according to claim 1, characterised in that one or more hydrocyclone stages and suspension tanks are connected between the first and second hydrocyclone stages and are operated analogously to the first hydrocyclone stage and subsequent suspension tank.

## Revendications

1. Procédé de purification de gypse dans une installation de désulfuration de fumées, opérant avec une suspension de pierre à chaux, en utilisant des hydrocyclones, caractérisé en ce que :
a) la suspension de gypse obtenue à l'aide de la suspension de pierre à chaux, est introduite dans un premier étage d'hydrocyclone (1), qui opère avec une concentration en solides dans l'effluent inférieur de 60 à 80% en poids et dont l'effluent supérieur (10) est transféré dans une cuve de stockage (2),
b) l'effluent inférieur (11) du premier étage d'hydrocyclone est transféré dans une cuve de suspension (3), il est dilué dans celle-ci jusqu'à une concentration en solide de 5 à 20% en poids et il est transféré dans un second étage d'hydrocyclone (4), dont l'effluent supérieur (13) est canalisé jusque dans la cuve de stockage (2),
c) le gypse contenu dans l'effluent inférieur (14) du second étage d'hydrocyclone (4), et ayant une concentration en solide de 40 à 60% en poids, est séparé au moyen d'un filtre à bande (5) ou d'une centrifugeuse et est sorti du processus et également
d) les effluents supérieurs collectés dans la cuve de stockage (2) sont transférés dans un troisième étage d'hydrocyclone (6) dont l'effluent supérieur (17) est libéré des petites particules solides dans un épaississeur (8) tandis que l'eau claire (23) de l'épaississeur (8) réglée à une concentration en solides inférieure à 2 g/l, est canalisée jusque dans la cuve de suspension (3) en vue d'une dilution conforme à b) et rejoint l'effluent inférieur (16) du troisième étage d'hydrocyclone (6) pour la préparation d'une suspension de pierre à chaux dans la cuve (7), et la suspension de pierre à chaux (20) est utilisée dans l'installation de désulfuration de fumées pour obtenir la suspension de gypse (9).

2. Procédé selon la revendication 1, caractérisé en ce qu'il est prévu entre le premier et le second étage d'hydrocyclone un ou plusieurs étages d'hydrocyclone et une ou plusieurs cuves de suspension, qui opèrent d'une façon analogue au premier étage d'hydrocyclone et à la cuve de suspension disposée à la suite.
